# EUROPÄISCHE PATENTSCHRIFT

(11) **EP 0 676 041 B1**
(45) Veröffentlichungstag und Bekanntmachung des Hinweises auf die Patenterteilung: **25.03.1998**
(21) Anmeldenummer: 94902620.7
(22) Anmeldetag: 21.12.1993
(51) Int. Cl.: G01L 9/00

(54) **DRUCKMESSUMFORMER**
PRESSURE MEASUREMENT TRANSDUCER
TRANSDUCTEUR DE MESURE DE PRESSION

(30) Priorität: 23.12.1992 DE 4244460
(43) Veröffentlichungstag der Anmeldung: 11.10.1995
(73) Patentinhaber: SIEMENS AKTIENGESELLSCHAFT, 80333 München (DE)
(72) Erfinder: MÄDLER, Armin, D-12349 Berlin (DE)
(86) Internationale Anmeldenummer: DE9301237
(87) Internationale Veröffentlichungsnummer: WO9415188

(56) Entgegenhaltungen:
- WO-A-91/04475
- DE-A- 3 047 276

## Beschreibung

Die Erfindung bezieht sich auf einen Druckmeßumformer mit einem Drucksensor, der am Boden einer topfartigen Ausnehmung eines metallenen Druckzuführungskörpers angebracht ist, und mit einer elektronischen Schaltungsanordnung, die der Niederdruckseite des Drucksensors benachbart in einem Gehäuse des Druckmeßumformers angeordnet und über elektrische Verbindungsleitungen mit dem Drucksensor verbunden ist.

Ein Druckmeßumformer dieser Art ist in der US-PS 4 085 620 beschrieben. Bei diesem bekannten Druckmeßumformer befindet sich in dem Druckzuführungskörper am Boden nicht nur der Drucksensor, sondern auch eine Anschlußplatte und eine Schaltungsanordnung zur Temperaturkompensation. Über elektrische Verbindungsleitungen ist der Drucksensor bzw. die Schaltungsanordnung zur Temperaturkompensation an eine elektrische Verbindungseinheit angeschlossen. Diese Verbindungseinheit ist am Übergang von dem Druckzuführungskörper zu dem Gehäuse mit der elektronischen Schaltungsanordnung angebracht.

Der Erfindung liegt die Aufgabe zugrunde, einen Druckmeßumformer so auszugestalten, daß im Falle einer Drucküberbelastung des Drucksensors mit einhergehendem mechanischen Durchbruch die elektronische Schaltungsanordnung vor Beschädigungen geschützt ist.

Zur Lösung dieser Aufgabe ist bei einem Druckmeßumformer der eingangs angegebenen Art erfindungsgemäß am Drucksensor niederdruckseitig ein Ende eines Schlauches befestigt, dessen anderes Ende in eine Richtung an dem Gehäuse mit der elektronischen Schaltungsanordnung vorbei aus dem Gehäuse des Druckmeßumformers hinaus führt; die topfartige Ausnehmung ist unter Umhüllung des Schlauches und der elektrischen Verbindungsleitungen mit Gießharz vergossen.

Ein wesentlicher Vorteil des erfindungsgemäßen Druckmeßumformers besteht darin, daß die elektronische Schaltungsanordnung vor mechanischen Beschädigungen geschützt ist, wenn im Falle einer Drucküberbelastung der Drucksensor zerstört und dadurch der Druck voll in Richtung auf die elektronische Schaltungsanordnung wirkt. Durch das Gießharz wird nämlich diese Druckbelastung abgefangen, indem der Gießharz-Verguß gewissermaßen einen Schutzwall vor der elektronischen Schaltungsanordnung bildet, wobei der eingebettete Schlauch den Druck nach außen in eine ungefährliche Richtung leitet. Diese Sicherung der elektronischen Schaltungsanordnung ist dabei in vorteilhaft einfacher Weise bewerkstelligt, weil sie lediglich durch Vergießen mit Gießharz unter Einbettung eines Schlauches erreicht ist.

Es ist zwar aus der GB 2 247 077 A ein Druckmeßumformer bekannt, bei dem zum Schutz vor mechanischen Beschädigungen bei Überdruck ein Druckabbau durch eine nach außen führende Öffnung bewirkt wird, jedoch ist bei diesem Meßumformer die Öffnung ein Loch in der Rückwand, das durch einen bei Überdruck herausschleuderbaren Stöpsel verschlossen ist.

Ferner ist es an sich bekannt (DE 42 03 832 A1), bei einem Druckaufnehmer einen Gießharzverguß vorzunehmen, jedoch ist hierbei der Verguß vorgenommen worden, um die einzelnen Bestandteile des Aufnehmers, wie Druckaufnehmerchip, Sockel, inneren Leiter und Chipkontaktfläche integrierend so zu kapseln, daß mechanische Spannungen und Dehnungen verringert werden.

Außerdem ist es aus der DE 30 47 276 A1 bekannt, einen Drucksensor am Boden eines metallischen Dichtungsteils anzubringen, oberhalb dessen sich eine elektronische Schaltungsanordnung befindet. Das Innere des Dichtungsteils ist durch einen eingeschweißten Einsatz hermetisch gegenüber der Schaltungsanordnung verschlossen, so daß selbst bei großer einseitiger Druckbelastung mit mechanischem Durchbruch des Drucksensors eine Beschädigung der elektronischen Schaltungsanordnung nicht eintreten kann.

Bei dem erfindungsgemäßen Druckmeßumformer ist zur Erzielung einer festen Halterung des Gießharzes dieses vorteilhafterweise durch eine Aushöhlung in der Seitenwand der topfartigen Ausnehmung verankert.

Im Hinblick auf eine möglichst einfache Montage des erfindungsgemäßen Druckmeßumformers wird es als vorteilhaft angesehen, wenn das eine Ende des Schlauches auf ein niederdruckseitiges Anschlußröhrchen des Drucksensors aufgeschoben ist.

Das andere Ende des Schlauches, also das Ende, das der Niederdruckseite des Druckumformers nicht zugewandt ist, kann in unterschiedlicher Weise aus dem Gießharz herausgeführt sein; wichtig ist, daß das andere Ende des Schlauches nicht in Richtung auf die elektronische Schaltungsanordnung bzw. das sie aufnehmende Gehäuse des Druckmeßumformers weist, weil sonst ein Überdruck die elektronische Schaltungsanordnung in unerwünschter Weise bei einem Durchbruch beaufschlagen könnte. Als besonders vorteilhaft wird es angesehen, wenn sich im Boden der topfartigen Ausnehmung des Druckzuführungskörpers eine Bohrung befindet, die aus dem Druckzuführungskörper herausführt, und wenn sich in der Bohrung das andere Ende des Schlauches befindet. Diese Art der Anbringung des anderen Endes des Schlauches ist vorteilhaft einfach in der Fertigung.

Um die Fertigung des erfindungsgemäßen Druckmeßumformers möglichst kostengünstig zu gestalten, wird die topfartige Ausnehmung des Druckzuführungskörpers in vorteilhafter Weise relativ flach ausgestaltet. Um trotzdem einen vollständigen Verguß des Schlauches zu erreichen, ist gemäß einer Weiterbildung des erfindungsgemäßen Druckmeßumformers am oberen Rande der topfartigen Ausnehmung ein Rohr aus flexiblem Material gehalten, das eine Gießform für das Gießharz bildet.

Ebenfalls einer vereinfachten Herstellung des erfindungsgemäßen Druckmeßumformers dienlich ist es, wenn das Anschlußröhrchen des Drucksensors an seinem dem Drucksensor zugewandten Ende eine Isolierbuchse trägt, durch die elektrische Anschlußstifte des Drucksensors hindurchragen, und wenn auf der von dem Drucksensor abgewandten Seite der Isolierbuchse ein die elektrischen Verbindungsleitungen tragendes flexibles Leiterband endet, dessen Leiterbahnen mit den Anschlußstiften des Drucksensors elektrisch verbunden sind.

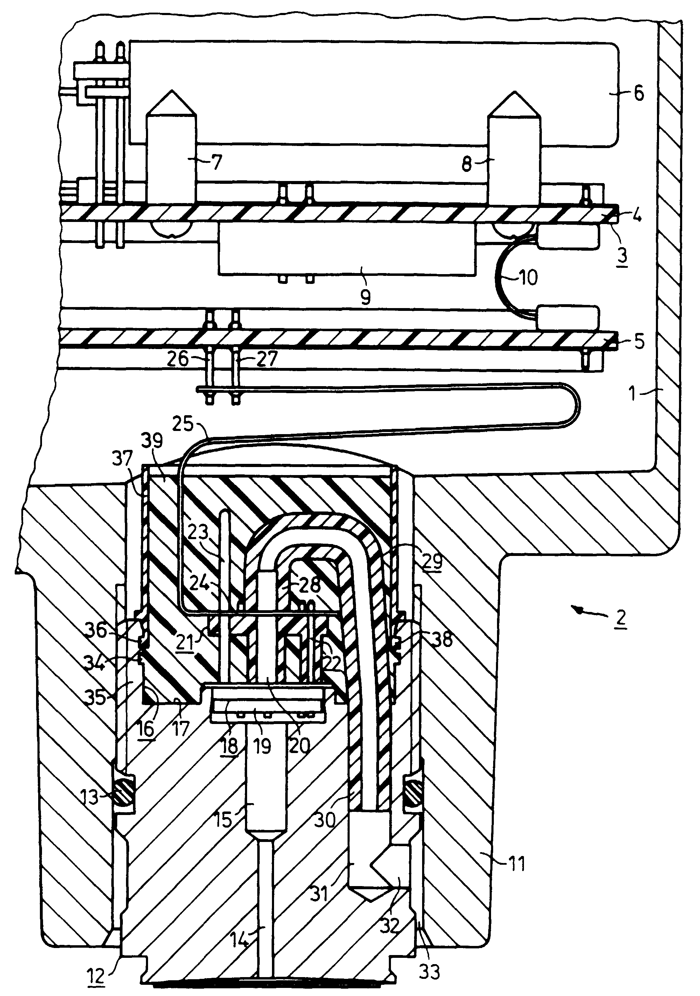

Zur Erläuterung der Erfindung ist in der Figur ein Schnitt durch den in bezug auf die Erfindung wesentlichen Teil eines Ausführungsbeispiels des erfindungsgemäßen Druckmeßumformers wiedergegeben.

Wie die Figur zeigt, ist in einem in ihr nur teilweise gezeigten Gehäuse 1 eines Druckmeßumformers 2 eine elektronische Schaltungsanordnung 3 untergebracht, die Leiterplatten 4 und 5 mit in der Figur aus Gründen der besseren Übersichtlichkeit nur teilweise dargestellten elektronischen Bauelementen enthält. So ist in der Figur eine Stromversorgungseinrichtung 6 zu erkennen, die als vergossener Block mittels Halteelementen 7 und 8 an der Leiterplatte 4 befestigt ist. Auch ein integriertes Bauteil 9 ist an der Leiterplatte 4 befestigt. Zwischen den Leiterplatten 4 und 5 verläuft ein flexibles Leiterband 10, um eine elektrische Verbindung der Leiterplatten 4 und 5 untereinander zu erreichen.

Das Gehäuse 1 weist auf seiner in der Figur unteren Seite einen Aufnahmestutzen 11 auf, in den ein Druckzuführungskörper 12 unter Zwischenlegung eines Dichtringes 13 eingeschraubt ist. Der Druckzuführungskörper 12 weist einen Druckzuführungskanal 14 auf, der in seinem oberen Teil 15 erweitert ist.

An seinem in der Figur oberen Ende weist der Druckzuführungskörper 12 eine topfartige Ausnehmung 16 auf, an deren Boden 17 ein Drucksensor 18 durch Schweißen angebracht ist. Der Drucksensor 18 ist in üblicher Weise mit einer Bondplatte 19 versehen.

Der Drucksensor 18 ist auf seiner Niederdruckseite mit einem Anschlußröhrchen 20 versehen, auf das eine Isolierbuchse 21 aufgesteckt ist. Die Isolierbuchse 21 ist mit weiteren Durchgangslöchern für Anschlußstifte 22 des Drucksensors 18 sowie für ein Öleinfüllröhrchen 23 versehen. Auf der von dem Drucksensor 18 abgewandten Seite 24 der Isolierbuchse 21 liegt ein flexibles Leiterband 25 auf, das mit seinen einzelnen Leiterbahnen mit den Anschlußstiften 22 des Drucksensors 18 elektrisch verbunden ist. Das Leiterband 25 führt zu Anschlüssen 26 und 27 auf der Leiterplatte 5.

Auf dem in der Figur oberen Ende des Anschlußröhrchens 20 des Drucksensors 18 befindet sich ein Ende 28 eines Schlauches 29, dessen anderes Ende 30 in eine Bohrung 31 eingesteckt ist, die in dem Boden 17 der topfartigen Ausnehmung 16 parallel zum Druckzuführungskanal 14 eingebracht ist. Diese Bohrung 31 führt über eine seitliche Öffnung 32 im Druckzuführungskörper 12 und einen Auslaßkanal 33 nach außen, so daß darüber eine Beaufschlagung des Drucksensors 18 auf seiner Niederdruckseite mit Atmosphärendruck erfolgt.

Die Figur zeigt ferner, daß im Bereich des oberen Randes der topfartigen Ausnehmung 16 des Druckzuführungskörpers 12 eine Aushöhlung 34 in der Seitenwand 35 der topfartigen Ausnehmung 16 vorgesehen ist. Eine weitere, ringförmige Ausnehmung 36 in der Seitenwand 35 dient zur Halterung eines Isolierrohres 37, das mit einem äußeren Ansatz 38 in die weitere Aushöhlung 36 eingeschnappt ist. Das Rohr 37 dient als verlorene Gußform, weil nach seiner Montage der Innenraum des Rohres 37 und die topfförmige Ausnehmung 16 mit Gießharz 39 gefüllt werden. Das Gießharz 39 selbst ist mittels der Aushöhlung 34 mit der Seitenwand 35 der topfartigen Ausnehmung 16 verankert. Bevor die Befüllung mit Gießharz erfolgt, ist über das Öleinfüllröhrchen 23 eine Befüllung des Drucksensors 18 mit einem inkompressiblen Öl erfolgt und anschließend das Öleinfüllröhrchen 23 verschlossen worden.

Der Druckmeßumformer ist hinsichtlich seiner elektronischen Schaltungsanordnung 3 vor einer gefährlichen Drucküberlastung und damit vor einer Beschädigung geschützt, weil ein Überdruck über den Schlauch 28 nach außen geleitet wird. Dabei kann der Gießharzkörper insgesamt nicht in Richtung auf die elektronische Schaltungsanordnung 3 in das Gehäuse 1 geschleudert werden, weil das Gießharz nach seiner Aushärtung in der einen Aushöhlung 34 fest verankert ist; hinzu kommt, daß auch das Rohr 37 in der weiteren Aushöhlung 36 fest verankert ist.

## Patentansprüche

1. Druckmeßumformer mit einem Drucksensor (18), der am Boden einer topfartigen Ausnehmung (16) eines metallenen Druckzuführungskörpers (12) angebracht ist, und mit einer elektronischen Schaltungsanordnung (3), die der Niederdruckseite des Drucksensors (18) benachbart in einem Gehäuse des Druckmeßumformers angeordnet und über elektrische Verbindungsleitungen (25) mit dem Drucksensor (18) verbunden ist,
**dadurch gekennzeichnet**,
daß am Drucksensor (18) niederdruckseitig ein Ende (28) eines Schlauches (29) befestigt ist, dessen anderes Ende (30) in eine Richtung an dem Gehäuse (1) mit der elektronischen Schaltungsanordnung (3) vorbei aus dem Gehäuse (1) des Druckmeßumformers hinaus führt, und daß die topfartige Ausnehmung (16) unter Umhüllung des Schlauches (29) und der elektrischen Verbindungsleitungen (25) mit Gießharz (39) vergossen ist.

2. Druckmeßumformer nach Anspruch 1,
**dadurch gekennzeichnet**,
daß das Gießharz (39) durch eine Aushöhlung (35) in der Seitenwand (25) der topfartigen Ausnehmung (16) verankert ist.

3. Druckmeßumformer nach einem der vorangehenden Ansprüche,
**dadurch gekennzeichnet**,
daß sich im Boden (17) der topfartigen Ausnehmung (16) des Druckzuführungskörpers (12) eine Bohrung (31) befindet, die aus dem Druckzuführungskörper (12) hinausführt, und daß sich in der Bohrung (31) das andere Ende (30) des Schlauches (24) befindet.

4. Druckmeßumformer nach einem der vorangehenden Ansprüche,
**dadurch gekennzeichnet,**
daß am oberen Rande der topfartigen Ausnehmung (16) ein Rohr (37) aus flexiblem Material gehalten ist, das eine Gießform für das Gießharz (39) bildet.

5. Druckmeßumformer nach einem der vorangehenden Ansprüche,
**dadurch gekennzeichnet,**
daß das eine Ende (28) des Schlauches (29) auf ein niederdruckseitiges Anschlußröhrchen (20) des Drucksensors (18) aufgeschoben ist.

6. Druckmeßumformer nach Anspruch 5,
**dadurch gekennzeichnet,**
daß das Anschlußröhrchen (20) des Drucksensors (18) an seinem dem Drucksensor (18) zugewandten Ende eine Isolierbuchse (21) trägt, durch die elektrische Anschlußstifte (22) des Drucksensors (18) hindurchragen, und daß auf der von dem Drucksensor (18) abgewandten Seite der Isolierbuchse (21) ein die elektrischen Verbindungsleitungen tragendes flexibles Leiterband (25) endet, dessen Leiterbahnen mit den Anschlußstiften (22) des Drucksensors (18) elektrisch verbunden sind.

## Claims

1. A pressure transducer with a pressure sensor (18) which is arranged on the base of a cup-like recess (16) of a metallic pressure supply body (12), and with an electronic circuit arrangement (3) which is arranged in a housing of the pressure transducer adjacent to the low-pressure side of the pressure sensor and is connected via electric connection lines (25) to the pressure sensor (18), characterised in that one end (28) of a flexible pipe (29) is attached to the pressure sensor (18) on the low pressure side, the other end (30) of said flexible pipe extending out of the housing (1) of the pressure transducer in a direction leading past the housing (1) with the electronic circuit arrangement (3), and that the cup-like recess (16) is sealed with casting resin (39), encasing the flexible pipe (29) and the electric connection lines (25).

2. A pressure transducer according to Claim 1, characterised in that the casting resin (39) is secured by means of a cavity (35) in the side wall (25) of the cup-like recess (16).

3. A pressure transducer according to one of the preceding claims, characterised in that a bore (31), which leads out of the pressure supply body (12), is arranged in the base (17) of the cup-like recess (16) of the pressure supply body (12), and that the other end (30) of the flexible pipe (24) is arranged in the bore (31).

4. A pressure transducer according to one of the preceding claims, characterised in that a tube (37) made of flexible material which forms a casting mould for the casting resin (39) is fixed to the upper edge of the cup-like recess (16).

5. A pressure transducer according to one of the preceding claims, characterised in that the one end (28) of the flexible pipe (29) is slipped onto a connection pipe (20) of the pressure sensor (18) on the low pressure side.

6. A pressure transducer according to Claim 5, characterised in that at its end facing towards the pressure sensor (18) the connection pipe (20) of the pressure sensor (18) bears an insulating bush (21), through which the electric terminal pins (22) of the pressure sensor (18) project, and that a flexible conductor strip (25), which bears the electric connection lines and the conductor paths of which are electrically connected to the terminal pins (22) of the pressure sensor (18), terminates on the side of the insulating bush (21) facing away from the pressure sensor (18).

## Revendications

1. Transducteur de mesure de pression comportant un capteur (18) de pression, qui est monté au fond d'un évidement (16) en forme de pot d'un élément (12) d'alimentation en pression métallique, et comportant un montage (3) électronique, qui est monté à proximité du côté de la basse pression du capteur (18) de pression, dans un boîtier du transducteur de mesure de pression, et qui, par l'intermédiaire de conducteurs (25) de liaison électriques est relié au capteur (18) de pression, caractérisé en ce qu'il est fixé au capteur (18) de pression, du côté de la basse pression, une extrémité (28) d'un tuyau (29) souple, dont l'autre extrémité (30), sort dans une direction, du boîtier (1) du transducteur de mesure de pression en passant devant le boîtier (1) comportant le montage (3) électronique, et en ce que l'évidement (16) en forme de pot est enrobé de résine (39) de coulée qui entoure le tuyau (29) souple et les conducteurs (25) de liaison électrique.

2. Transducteur de mesure de pression suivant la revendication 1, caractérisé en ce que la résine (39) de coulée est ancrée par un creux (34) dans la paroi (35) latérale de l'évidement (16) en forme de pot.

3. Transducteur de mesure de pression suivant l'une des revendications précédentes, caractérisé en ce qu'il se trouve au fond (17) de l'évidement (16) en forme de pot de l'élément (12) d'alimentation en pression un trou (31) qui mène à l'extérieur de l'élément (12) d'alimentation en pression, et en ce que l'autre extrémité (30) du tuyau (24) souple se trouve dans le trou (31).

4. Transducteur de mesure de pression suivant l'une des revendications précédentes, caractérisé en qu'il est retenu au bord supérieur de l'évidement (16) en forme de pot un tuyau (37) en un matériau flexible. qui forme un moule pour la résine (39) de coulée.

5. Transducteur de mesure de pression suivant l'une des revendications précédentes, caractérisé en ce que l'une (28) des extrémités du tuyau (29) souple est enfilée sur une tubulure (20) de raccordement du capteur (18) de pression située du côté de la basse pression.

6. Transducteur de mesure suivant la revendication 5. caractérisé en ce que la tubulure (20) de raccordement du capteur (18) de pression porte, à son extrémité tournée vers le capteur (18) de pression, une douille (21) isolante par laquelle passe les broches (22) de raccordement électrique du capteur (18) de pression, et en ce qu'une bande (25) conductrice souple, qui porte les conducteurs de liaison électriques et dont les pistes conductrices sont reliées de manière conductrice de l'électricité aux broches (22) de raccordement du capteur (18) de pression, se termine du côté de la douille (21) isolante éloignée du capteur (18) de pression.
